# EUROPEAN PATENT APPLICATION

(11) **EP 4 403 249 A1**
(43) Date of publication of application: **24.07.2024**
(21) Application number: 23305078.0
(22) Date of filing: 23.01.2023
(51) Int. Cl.: B01D 53/14, B01D 53/18, B01D 53/78

(54) **INDUSTRIAL PLANT FOR GAS TREATMENT**

(71) Applicant: Technip Energies France, 92741 Nanterre Cedex (FR)
(72) Inventor: Starr, James, 92741 NANTERRE CEDEX (FR); Cheadle, Matthew, 92741 NANTERRE CEDEX (FR); Stone, Andrew, 92741 NANTERRE CEDEX (FR); Schenk, Myrian A., 92741 NANTERRE CEDEX (FR)
(74) Representative: McWilliams, David John

(57) **Abstract**

The invention relates to an industrial plant (10) for gas treatment, comprising a gas treatment unit (14), the gas treatment unit comprising a first (30), a second (32) and a third (34) compartments extending vertically ;
the first compartment comprising a gas inlet (40), the second compartment comprising a first gas outlet (42) ;
the gas treatment unit also comprising a first (36) and a second (38) porous structures in the first and in the second compartments, the first porous structure being situated higher than the gas inlet, the second porous structure being situated lower than the first gas outlet.

The gas treatment unit also comprises : a first opening (54), situated between the first and third compartments, higher than the first porous structure ; and a second opening (56), situated between the third and second compartments, lower than the second porous structure.

## Description

The present invention relates to an industrial plant for gas treatment, comprising a wall assembly and at least a first gas treatment unit received in the wall assembly, the first gas treatment unit comprising a first, a second and a third compartments, each compartment extending vertically between an upper end and a lower end ; the lower end of the first compartment comprising a gas inlet, the upper end of the second compartment comprising a first gas outlet ; the first gas treatment unit also comprising a first and a second porous structures, disposed respectively in the first and in the second compartments, the first porous structure being situated higher than the gas inlet, the second porous structure being situated lower than the first gas outlet.

The invention particularly relates to post-combustion carbon capture plants, designed for removing contaminants such as CO₂ from a flue gas, before releasing said gas in the atmosphere. Such plants generally need large-sized columns, adapted for the treatment of a large flow of flue gas.

The aim of the invention is to provide an industrial plant with large-sized columns, preferably square or rectangular columns, and of easy installation and implementation.

For this purpose, the invention relates to an industrial plant of the aforementioned type, wherein the first gas treatment unit also comprises : a first opening, situated between the first and third compartments, higher than the first porous structure ; and a second opening, situated between the third and second compartments, lower than the second porous structure.

According to preferred embodiments, the industrial plant may include one or more of the following features, considered alone or in any technically possible combination:
- the upper end of the first compartment comprises a second gas outlet ;
- the first gas treatment unit further comprises a first and a second vanes, allowing to close respectively the second gas outlet and the first opening ;
- the upper end and the lower end of the first compartment comprise respectively a first liquid inlet and a first liquid outlet, the first liquid inlet being configured for pouring a first liquid on the first porous structure ;
- the lower end of the first compartment comprises a first bottom wall ; and a first liquid tank is formed between said first bottom wall and the gas inlet, the first liquid outlet being connected to said first liquid tank ;
- the upper end and the lower end of the second compartment comprise respectively a second liquid inlet and a second liquid outlet, the second liquid inlet being configured for pouring a second liquid on the second porous structure ;
- the lower end of the second compartment comprises a second bottom wall ; and a second liquid tank is formed between said second bottom wall and the second opening, the second liquid outlet being connected to said second liquid tank ;
- the industrial plant also comprises at least one pump configured for being connected to the first and/or to the second liquid outlet of the first gas treatment unit;
- the industrial plant also comprises : a first pump, configured for being connected to the first liquid outlet; and a second pump, configured for being connected to the second liquid outlet ;
- the industrial plant also comprises at least one sump receiving the at least one pump ;
- the industrial plant comprises a plurality of pumps and a plurality of sumps, each pump being received in an individual sump ;
- the industrial plant also comprises a second gas treatment unit received in the wall assembly, the first and second gas treatment units being arranged in parallel ;
- the at least one pump is also configured for being connected to the second gas treatment unit ;
- the second gas outlet of the first gas treatment unit is connected to the gas inlet of the second gas treatment unit.

The invention will be easier to understand in view of the following description, provided solely as an example, and with reference to the appended drawings, wherein :
- Figure 1 is a first schematic, cross-sectional view of an industrial plant, according to an embodiment of the invention ; and
- Figure 2 is a second schematic, cross-sectional view of the industrial plant of Figure 1.

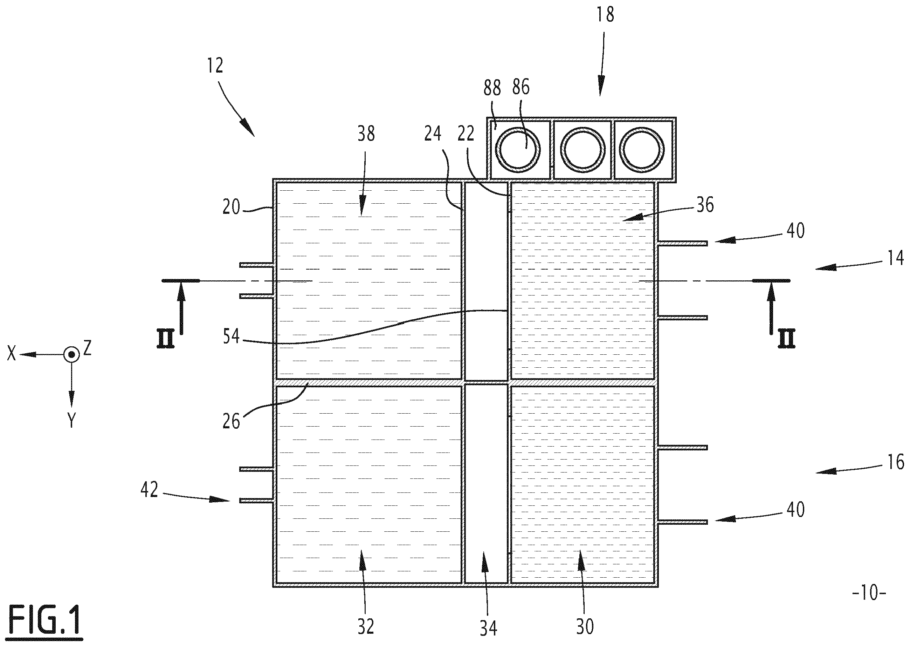

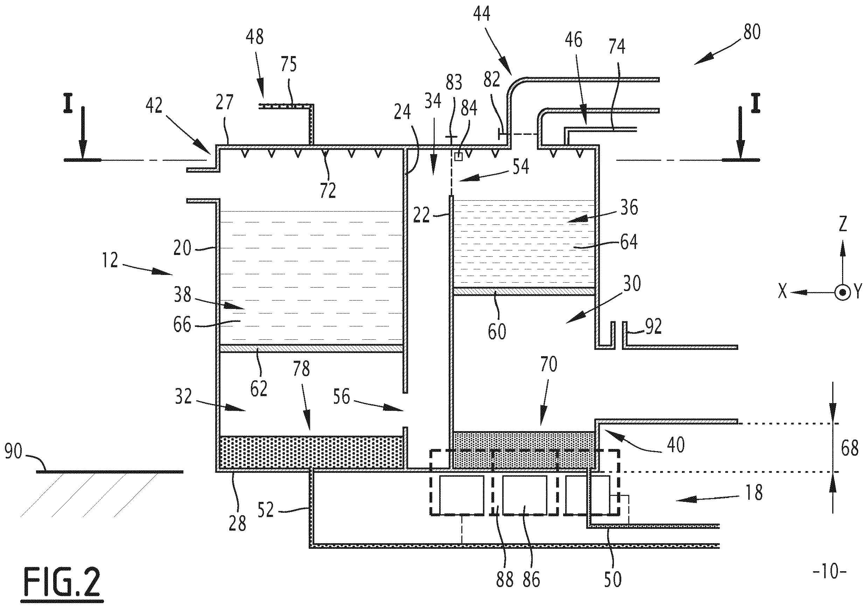

Figures 1 and 2 show an industrial plant 10 according to an embodiment of the invention.

The industrial plant 10 is designed for gas treatment. Preferably, the industrial plant 10 is designed for post-combustion carbon capture, as detailed below.

The industrial plant 10 comprises : a wall assembly 12 ; at least a gas treatment unit 14, 16 ; and a pump unit 18.

The wall assembly 12 forms a built structure of the industrial plant 10. The wall assembly 12 comprises : outer lateral walls 20 ; inner lateral walls 22, 24, 26 ; a top wall 27 ; and a bottom wall 28. The outer and inner lateral walls extend substantially vertically. The top and bottom walls extend substantially horizontally.

In the following description, an orthonormal basis (X, Y, Z), associated with the wall assembly 12, is considered. Z represents the vertical direction.

In the embodiment of Figures 1 and 2, the outer lateral walls 20 substantially extend along (X, Z) and (Y, Z) planes, the wall assembly 12 thus having a substantially rectangular base surface.

The wall assembly 12 comprises a first 22 and a second 24 inner lateral walls, extending along (Y, Z) planes. In the embodiment of Figures 1 and 2, the wall assembly 12 also comprises a third inner lateral wall 26, extending along a (X, Z) plane.

Preferably, the wall assembly 12 is made of materials adapted for a bearing structure, such as concrete or stainless steel.

The industrial plant 10 comprises at least a first gas treatment unit 14, received in the wall assembly 12. In the embodiment of Figures 1 and 2, the industrial plant 10 comprises a first 14 and a second 16 gas treatment units, received in the wall assembly 12. The first 14 and second 16 gas treatment units are at least partially isolated from each other by the third inner lateral wall 26.

In the following description, the first 14 and second 16 gas treatment units are considered identical and disposed in parallel. Only the first gas treatment unit 14 will be described below.

The first gas treatment unit 14 comprises : a first 30, a second 32 and a third 34 compartments ; a first 36 and a second 38 porous structures ; a gas inlet 40 ; a first 42 and a second 44 gas outlets ; a first 46 and a second 48 liquid inlets ; a first 50 and a second 52 liquid outlets ; and a first 54 and a second 56 openings.

The first 30, second 32 and third 34 compartments are defined by the wall assembly 12. More specifically, the first 30, third 34 and second 32 compartments are aligned along the direction X between outer walls 20 of the wall assembly 12. The first 30 and third 34 compartments are separated from each other by the first inner lateral wall 22. The third 34 and second 32 compartments are separated from each other by the second inner lateral wall 24.

Each of the first 30, second 32 and third 34 compartments extends vertically between an upper end and a lower end. Preferably, a height along Z of the compartments 30, 32, 34 is more than 10 meters, more preferably around 20 meters.

The first 36 and second 38 porous structures are disposed respectively in the first 30 and in the second 32 compartments. Preferably, each of the first 36 and second 38 porous structures comprises a porous support 60, 62 and a structural packing 64, 66.

The porous support 60, 62, such as a grid, extends horizontally and is fixed to the outer 20 and inner 22, 24, 26 lateral walls defining the corresponding first or second compartment 30, 32. The porous support 60, 62 is disposed at a first non-zero distance from the top wall 27 and at a second non-zero distance from the bottom wall 28. Preferably, the porous support 60, 62 is disposed at a height comprised between 10% and 70% of a height of the corresponding compartment 30, 32, relative to the bottom wall 28.

The structural packing 64, 66 is disposed on the corresponding porous support 60, 62, so as to form the corresponding porous structure 36, 38. As detailed below, the porous structure 36, 38 is designed for allowing contact between a gas and a liquid. The physical and/or chemical features of the structural packing 64, 66 are selected accordingly, as illustrated by the examples below.

The gas inlet 40 opens at the lower end of the first compartment 30, below the porous support 60 of the first porous structure 36. In the embodiment of Figures 1 and 2, the gas inlet 40 opens in an outer lateral wall 20 defining the first compartment 30.

Preferably, the gas inlet 40 is situated at a non-zero vertical distance 68 from the bottom wall 28. More precisely, between the bottom wall 28 and the gas inlet 40, the lower end of the first compartment 30 forms a first liquid tank 70.

The first gas outlet 42 opens at the upper end of the second compartment 32, above the second porous structure 38. In the embodiment of Figures 1 and 2, the first gas outlet 42 opens in an outer lateral wall 20 defining the second compartment 32. In another embodiment (not shown), the first gas outlet opens in the top wall 27.

The second gas outlet 44 opens at the upper end of the first compartment 30, above the first porous structure 36. In the embodiment of Figures 1 and 2, the second gas outlet 44 opens in the top wall 27.

The first 46 and second 48 liquid inlets open at the upper ends, respectively of the first 30 and of the second 32 compartments, above the corresponding porous structure 36, 38. In the embodiment of Figures 1 and 2, each of the first 46 and second 48 liquid inlets comprises nozzles 72 or sprinklers, fixed to the top wall 27. In another embodiment (not shown), each of the first 46 and second 48 liquid inlets open in an outer lateral wall 20 of the corresponding compartment 30, 32 and is connected to a dispensing device extending over the corresponding porous structure 36, 38.

The first liquid inlet 46 is configured for pouring a first liquid 74 on the first porous structure 36. The second liquid inlet 48 is configured for pouring a second liquid 75 on the second porous structure 38.

In a preferred embodiment, the first gas treatment unit 14 also comprises external coolers (not shown) for cooling the first liquid 74 upstream from the first liquid inlet 46.

The first 50 and second 52 liquid outlets open at the lower ends, respectively of the first 30 and of the second 32 compartments, below the corresponding porous structure 36, 38. In the embodiment of Figures 1 and 2, each of the first 50 and second 52 liquid outlets opens in the bottom wall 28.

The first opening 54 is formed between the first 30 and the third 34 compartments, above the first porous structure 36. In the embodiment of Figures 1 and 2, the first opening 54 is formed in an upper end of the first inner lateral wall 22.

The second opening 56 is formed between the third 34 and the second 32 compartments, below the second porous structure 38. In the embodiment of Figures 1 and 2, the second opening 56 is formed in a lower end of the second inner lateral wall 24.

Preferably, the second opening 56 is situated at a non-zero vertical distance 76 from the bottom wall 28. More precisely, between the bottom wall 28 and the second opening 56, the lower end of the second compartment 32 forms a second liquid tank 78. The first 50 and second 52 liquid outlets open respectively in the first 70 and in the second 78 liquid tanks.

In the embodiment of Figures 1 and 2, the first gas treatment unit 14 also comprises : a gas connection 80 ; a first 82 and a second 83 vanes ; and a temperature probe 84.

The gas connection 80 extends from the second gas outlet 44 and will be further described below.

The first vane 82 is configured for reversibly closing the second gas outlet 44. The second vane 83 is configured for reversibly closing the first opening 54.

According to an embodiment, the first gas treatment unit 14 also comprises a third vane (not shown) for reversibly closing the second opening 56.

The temperature probe 84 is situated in the first compartment 30, above the first porous structure 36, preferably close to the first opening 54.

The pump unit 18 is configured for evacuating the first 74 and/or second 75 liquid from the corresponding first 70 or second 78 liquid tank.

More precisely, the pump unit 18 comprises at least one pump 86 able to be connected to the first 50 and/or to the second 52 liquid outlet.

In a preferred embodiment, each of the first 50 and the second 52 liquid outlets is connected to a distinct pump 86.

In the embodiment of Figures 1 and 2, the pump unit 18 comprises at least one sump 88 receiving the at least one pump 86. As shown on Figure 2, the bottom wall 28 of the wall assembly 12 is level to a ground 90 on which the wall assembly is built, whereas the sump 88 is partially buried in said ground. It is therefore possible to use a submersion pump 86 by fluidly connecting the first 70 or second 78 liquid tank, or the first 50 or second 52 liquid outlet, with the sump 88.

In another embodiment (not shown), at least some of the sumps 88 are level with the bottom wall 28.

Preferably, the pump unit 18 comprises a plurality of pumps 86 and an individual sump 88 for each of said pumps 86.

Preferably, at least some pumps 86 of the pump unit 18 are also able to be connected to the liquid outlets of the second gas treatment unit 16. In other terms, the pump unit 18 is common to the first 14 and second 16 gas treatment units.

In a preferred embodiment, the industrial plant 10 is designed for post-combustion carbon capture. More precisely, the gas inlet 40 is connected to a flue gas source (not shown), such as a power plant. In the embodiment of Figures 1 and 2, the gas connection 80 extends to said power plant for recycling the flue gas, as described below.

Depending on the flue gas source, it may be advantageous to provide the industrial plant 10 with two or more gas treatment units 14, 16 disposed in parallel, each gas treatment unit having its own gas inlet 40. Such a configuration permits a gas inlet of limited cross-sectional surface. For example, the gas inlet 40 of each of the gas treatment units 14, 16 has a cross-section shaped as a 6 m × 6 m square.

In the preferred embodiment, the first compartment 30 is a direct contact cooler (DCC), designed for cooling the flue gas entering the industrial plant 10. For such a purpose, the first liquid 74 is cold water. Preferably, the structural packing 64 of the first porous structure 36 is chosen among metal or plastic grids and metal or plastic woven mesh. Alternatively, the structural packing 64 is made of metal, plastic, or ceramic thin vertical crimped sheets,stacked parallel to each other.

As a variant, the first compartment 30 comprises a supplementary gas inlet 92, allowing to add a supplementary gas to the flue gas entering the first compartment. Preferably, the supplementary gas comprises treatment chemicals such as ammonia or acids.

In the preferred embodiment, the second compartment 32 is an absorber column, designed for removing CO₂ from the flue gas by absorbing it into the second liquid 75. For such a purpose, the second liquid 75 is chosen among solvents such as amines ; and the structural packing 66 of the second porous structure 38 is preferably chosen among metal or plastic grids and metal or plastic woven mesh. The term "amines" means an aqueous liquor made of water plus amine molecule having a concentration between 20%wt to 70%wt. Alternatively, the structural packing 66 is made of metal, plastic, or ceramic thin vertical crimped sheets,stacked parallel to each other.

A method for implementing the industrial plant 10 will now be described.

A flux of flue gas enters the first compartment 30 of a gas treatment unit 14, 16 through the gas inlet 40 and moves upwards through the packing 64 of the first porous structure 36. A flux of the first liquid 74, here cold water, is poured or sprinkled on said first porous structure 36 and moves downwards. The resulting counter-current contact between the flue gas and the cold water 74 in the first porous structure 36 allows a heat exchange between said gas and said water. The gas flux attaining the upper end of the first compartment 30 is therefore cooled. The heated water is collected in the first liquid tank 70.

According to another embodiment, the first liquid 74 is a cold solution of caustic soda or of a similar compound. Thus, the contact between the flue gas and the first liquid 74 in the first porous structure 36 also allows the removal of some contaminants. The first porous structure 36 thus has a pre-scrubbing function.

According to an embodiment, a supplementary gas is injected through the supplementary gas inlet 92. Other contaminants are thus removed by the passage of the flue gas in the first porous structure 36.

Preferably, a temperature of the gas flux attaining the upper end of the first compartment 30 is measured by the probe 84. If said temperature is above a defined threshold, parameters of the external coolers (not shown) of the first liquid may be modified.

For example, the defined threshold is comprised between 40 °C and 65 °C.

According to a first embodiment, the first vane 82 is closed and the second vane 83 is at least partially opened. The gas flux moves downwards through the third compartment 34, and then enters the second compartment 32 through the second opening 56.

The second vane 83 and the third vane (not shown), installed in the second opening 56, allow a pressure regulation along the gas route.

The gas flux then moves upwards through the packing 66 of the second porous structure 38. A flux of the second liquid 75 is poured or sprinkled on said second porous structure 38 and moves downwards. The resulting counter-current contact between the gas flux and the second liquid 75 in the second porous structure 38 allows a capture of the CO₂ of the gas flux into the second liquid 75.

Preferably, an operating pressure of the plant 10 is close to the atmospheric pressure.

The COs-depleted gas flux is then evacuated through the first gas outlet 42, above the second porous structure 38. For example, the CO₂-depleted gas flux is released into the atmosphere through appropriate means such as a chimney. Alternatively, the first gas outlet 42 is connected to a supplementary treatment column.

The CO₂-charged solvent is collected in the second liquid tank 78.

The liquids filling the first 70 and second 78 liquid tanks are evacuated by connecting a pump 86 of the pump unit 18, or the corresponding sump 88, to the first 50 or to the second 52 liquid outlet.

The plurality of pumps 86 and sumps 88 of the pump unit 18 allows a sharing of the pumps between the different gas treatment units 14, 16 of the industrial plant 10. Each pump 86 having its individual sump 88 simplify the maintenance operations on a specific pump 86, by fluidly isolating the corresponding sump. The maintenance operations may therefore be carried out during a working of the other pumps of the pump unit 18.

According to a second embodiment, the second vane 83 is closed and the first vane 82 is opened. The gas flux is redirected to the power plant through the gas connection 80.

The flue gas attaining the second gas outlet 44 still contains oxygen, which is useful for combustion of fuel gas in some types of power plants. A cooled flue gas redirected to the power plant is beneficial to power output from said power plant.

Therefore, the gas treatments unit 14, 16 described above allow the use of the direct contact cooler 30, 36 for two different treatments of the incoming flue gas.

According to a particular embodiment, the second gas outlet 44 of the first gas treatment unit 14 is connected to the gas inlet 40 of the second gas treatment unit 16. According to such an embodiment, it is possible to direct the flue gas on two successive direct contact coolers 30, 36 before orienting the flue gas to the absorber column 32, 38 or back to the power plant.

## Claims

1. Industrial plant (10) for gas treatment, comprising a wall assembly (12) and at least a first gas treatment unit (14, 16) received in the wall assembly,
the first gas treatment unit comprising a first (30), a second (32) and a third (34) compartments, each compartment extending vertically between an upper end and a lower end ;
the lower end of the first compartment comprising a gas inlet (40), the upper end of the second compartment comprising a first gas outlet (42) ;
the first gas treatment unit also comprising a first (36) and a second (38) porous structures, disposed respectively in the first and in the second compartments, the first porous structure being situated higher than the gas inlet, the second porous structure being situated lower than the first gas outlet ;
the industrial plant being **characterized in that** the first gas treatment unit also comprises : a first opening (54), situated between the first and third compartments, higher than the first porous structure ; and a second opening (56), situated between the third and second compartments, lower than the second porous structure.

2. Industrial plant according to claim 1, wherein the upper end of the first compartment comprises a second gas outlet (44).

3. Industrial plant according to claim 2, wherein the first gas treatment unit further comprises a first (82) and a second (83) vanes, allowing to close respectively the second gas outlet and the first opening.

4. Industrial plant according to one of the preceding claims, wherein the upper end and the lower end of the first compartment comprise respectively a first liquid inlet (46) and a first liquid outlet (50), the first liquid inlet being configured for pouring a first liquid (74) on the first porous structure.

5. Industrial plant according to claim 4, wherein : the lower end of the first compartment comprises a first bottom wall (28) ; and a first liquid tank (70) is formed between said first bottom wall and the gas inlet, the first liquid outlet (50) being connected to said first liquid tank.

6. Industrial plant according to one of the preceding claims, wherein the upper end and the lower end of the second compartment comprise respectively a second liquid inlet (48) and a second liquid outlet (52), the second liquid inlet being configured for pouring a second liquid (75) on the second porous structure.

7. Industrial plant according to claim 6, wherein : the lower end of the second compartment comprises a second bottom wall (28) ; and a second liquid tank (78) is formed between said second bottom wall and the second opening, the second liquid outlet (52) being connected to said second liquid tank.

8. Industrial plant according to one of claims 4 to 7, also comprising at least one pump (86) configured for being connected to the first (50) and/or to the second (52) liquid outlet of the first gas treatment unit.

9. Industrial plant according to claim 8, comprising : a first pump (86), configured for being connected to the first liquid outlet (50) ; and a second pump, configured for being connected to the second liquid outlet (52).

10. Industrial plant according to claim 8 or 9, also comprising at least one sump (88) receiving the at least one pump (86).

11. Industrial plant according to claim 10, comprising a plurality of pumps (86) and a plurality of sumps (88), each pump being received in an individual sump.

12. Industrial plant according to one of the preceding claims, also comprising a second gas treatment unit (16) received in the wall assembly (12), the first (14) and second gas treatment units being arranged in parallel.

13. Industrial plant according to claim 12 combined with one of claims 8 to 11, wherein the at least one pump (86) is also configured for being connected to the second gas treatment unit (16).

14. Industrial plant according to claim 12 or 13 combined with claim 2, wherein the second gas outlet (44) of the first gas treatment unit (14) is connected to the gas inlet (40) of the second gas treatment unit (16).
